# FASCICULE DE BREVET EUROPEEN

(11) **EP 1 652 709 B1**
(45) Date de publication et mention de la délivrance du brevet: **17.06.2009**
(21) Numéro de dépôt: 05292106.1
(22) Date de dépôt: 10.10.2005
(51) Int. Cl.: B60J 7/185

(54) **Véhicule à toit pliable verrouillable**
Fahrzeug mit einem verriegelbaren Klappverdeck
Vehicle with a lockable folding roof

(30) Priorité: 02.11.2004 FR 0411670
(43) Date de publication de la demande: 03.05.2006
(73) Titulaire: Heuliez, 79142 Cerizay Cedex (FR)
(72) Inventeur: Guillez, Jean-Marc, 79140 Cirieres (FR); Queveau, Paul, 79140 Montravers (FR); Queveau, Gérard, 79140 Le Pin (FR)
(74) Mandataire: Lemoine, Jean-Sébastien

(56) Documents cités:
- EP-A- 0 884 208
- DE-A1- 10 240 567
- DE-A1- 10 242 725
- US-A1- 2001 017 478
- US-A1- 2004 032 148
- US-A1- 2004 046 416

## Description

La présente invention concerne un véhicule à toit mobile entre une position déployée et une position pliée, et verrouillable dans sa position déployée au-dessus de l'habitacle du véhicule.

On connaît un véhicule du type, comme par exemple montré dans le document DE 10240567, comprenant un bâti, un toit qui est mobile entre une position déployée dans laquelle il recouvre l'habitacle du véhicule, et une position pliée, des moyens d'entraînement qui sont adaptés à entraîner le toit de l'une à l'autre de ses positions et qui comprend un moteur, des moyens de verrouillage qui sont mobiles entre une position de verrouillage dans laquelle le toit est verrouillé dans sa position déployée, et une position de libération, et qui comprennent des organes de verrouillage solidarisés à un élément du toit et des organes complémentaires de verrouillage solidaires du bâti, et des moyens de déplacement qui sont adaptés à entraîner les moyens de verrouillage de l'une à l'autre de leurs positions et qui comprennent un moteur indépendant de celui faisant partie des moyens d'entraînement.

La présente invention vise à réaliser une nouvelle configuration des moyens de verrouillage permettant un verrouillage efficace du toit au bâti.

Selon l'invention, les organes complémentaires de verrouillage sont réalisés dans des brancards qui sont solidaires du bâti et entre lesquels le toit repose en position déployée.

En disposant les organes complémentaires de verrouillage le long des brancards, il est possible d'améliorer considérablement le verrouillage du toit, notamment en disposant plusieurs organes complémentaires de verrouillage le long de chaque brancard.

D'autres avantages et particularités apparaîtront avec la description du mode de réalisation donné à titre d'exemple et illustré par les dessins mis en annexe.
La figure 1 est une vue schématique de dessus du toit en position déployée, des moyens de verrouillages et des moyens d'entraînement et des moyens de déplacement,
La figure 2 est une vue schématique de côté avec le toit en positions déployée (traits pleins) et pliée (tirets) et les moyens d'entraînement, et
La figure 3 est une vue schématique de face illustrant les moyens de verrouillage en position de libération (traits pleins) et en position de verrouillage (tirets).

Un véhicule comprend un bâti muni de deux brancards 1 disposés longitudinalement de chaque côté de l'habitacle, chaque brancard 1 étant fixé, par son extrémité avant, à la traverse avant supportant le pare-brise, et, par son extrémité arrière, à une custode 2. Par ailleurs, dans le présent mode de réalisation, le bâti comprend également deux arches 3, chaque arche 3 étant située dans le prolongement longitudinal du brancard 1 correspondant et étant fixée par son extrémité avant à la custode 2 correspondante, et, par son extrémité arrière, à un élément arrière du bâti.

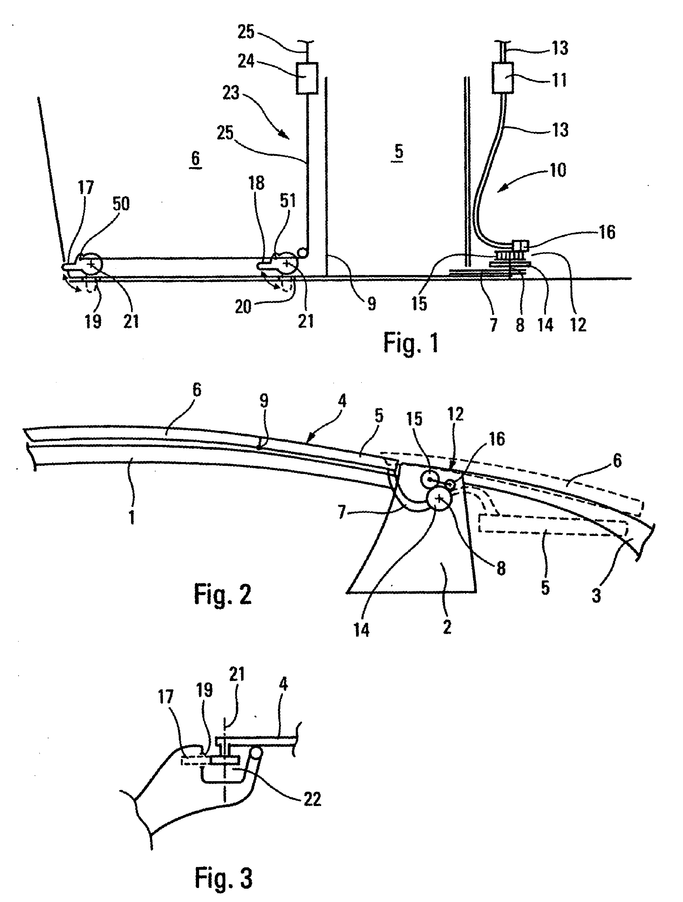

Le véhicule comporte également un toit 4 qui est mobile par rapport au bâti entre, d'une part, une position déployée dans laquelle il recouvre l'habitacle du véhicule et est disposé entre les brancards 1, et, d'autre part, une position pliée dans laquelle il découvre l'habitacle et est disposé entre les arches 3. Le toit 4 comprend, deux éléments 5,6 mobiles l'un par rapport à l'autre : un élément arrière 5 dont la partie arrière est articulée, de chaque côté, au bâti (dans le présent exemple par l'intermédiaire d'un bras 7 monté pivotant par rapport à un axe 8 transversal au véhicule), et un élément avant 6 dont la partie arrière est articulée à la partie avant de l'élément arrière 5 du toit 4 (dans le présent exemple par un axe 9 transversal au véhicule), et dont la partie avant est montée coulissante le long des brancards 1. Quand le toit 4 est en position déployée, l'élément arrière 5 est disposé dans le prolongement longitudinal de l'élément avant 6, derrière ce dernier (voir la figure 1, traits pleins). Quand le toit 4 est en position pliée, l'élément avant 6 est disposé au-dessus de l'élément arrière 5 (voir la figure 1, tirets).

Par ailleurs, le véhicule comprend des moyens d'entraînement 10 qui sont adaptés à entraîner le toit 4 de l'une à l'autre de ses deux positions extrêmes. Les moyens d'entraînement 10 comprennent un moteur 11 électrique qui est adapté à entraîner la rotation des deux bras 7 et celle de l'élément arrière 5 auquel est solidarisé le bras 7. Dans le présent mode de réalisation, un système de réduction 12 est interposé entre le moteur 11 et chaque bras 7. Chaque système de réduction 12 est relié au premier moteur par un câble de transmission 13 (en l'occurrence flexible) qui transmet au système de réduction 12 le mouvement rotatif généré par le moteur 11. Dans le présent exemple, chaque système de réduction 12 comprend un pignon aval 14 qui est solidarisé au bras 7, qui tourne autour de l'axe 8 et qui est engrené avec un pignon intermédiaire 15 lui même engrené avec un pignon amont 16 solidarisé au câble 13. Les moyens d'entraînement 10 sont portés par le toit 4.

De plus, le véhicule comprend des moyens de verrouillage 17,18,19,20 qui sont mobiles entre une position de verrouillage dans laquelle le toit 4 est verrouillé, et une position de libération dans laquelle le toit 4 est déverrouillé. Les moyens de verrouillage comprennent des organes de verrouillage 17,18 qui sont solidarisés à l'élément avant 6 du toit 4 et qui sont mobiles entre une position de verrouillage et une position de libération, et des organes complémentaires de verrouillage 19,20 solidaires du bâti. A chaque organe de verrouillage 17,18 formé par une patte de verrouillage 17,18 est associé une rainure 19,20 réalisée le long d'un brancard 1 formant organe complémentaire de verrouillage 19,20. L'élément avant 6 du toit 4 comporte, de chaque côté, une patte avant de verrouillage 17 qui est disposée à proximité de l'extrémité avant de l'élément avant 6, et, une patte arrière de verrouillage 18 qui est disposé à proximité de l'extrémité arrière de l'élément avant 6. Chaque patte de verrouillage 17,18 est montée rotativement selon un axe 21 vertical et s'étend longitudinalement quand elle est en position de libération, et transversalement au véhicule quand elle est en position de verrouillage. Quand le toit 4 est en position déployée, chaque patte 17,18, quand elle est en position de libération, est disposée dans une gouttière 22 qui est réalisée le long du brancard 1 correspondant à proximité de toit 4, et, quand elle est en position de verrouillage, elle pénètre dans la rainure correspondante 19,20 de façon à verrouiller le toit 4 en position déployée. Des rainures correspondantes sont réalisées le long des arches 3 afin de permettre le verrouillage du toit 4 en position pliée.

Par ailleurs, le véhicule comprend des moyens de déplacement 23 qui sont adaptés à entraîner les moyens de verrouillage 17,18,19,20 de l'une à l'autre de leurs positions. Les moyens de déplacement 23 comprennent un moteur 24 électrique qui est adapté à entraîner la rotation des pattes de verrouillage 17,18 et qui est solidarisé à l'élément avant 6 du toit 4. Dans le présent mode de réalisation, un câble 25 est relié au moteur 24 et, en 50,51, aux deux pattes de verrouillages 17,18 disposées sur un même côté.

Dans le présent mode de réalisation, l'ensemble formé par les moyens de déplacement 10, les moyens de verrouillage (excepté les rainures réalisées sur le bâti) et les moyens de déplacement 23 forment avec, le toit 4, un module tout équipé qui, de ce fait, peut être assemblé indépendamment du véhicule et livré au constructeur automobile. Son installation sur le véhicule est simple : il suffit de présenter le module sur le véhicule, de le positionner, d'effectuer la fixation du module de toit sur le véhicule et finalement de réaliser les branchements électriques. De plus, le module comprenant les moyens de déplacement et les moyens d'entraînement est très simple à tester individuellement par exemple sur un banc d'essai qui reprend la configuration du véhicule (points de fixation, organes complémentaires de verrouillage et connexions électriques).

Des modifications peuvent être apportées au présent mode de réalisation.

Il est ainsi possible que l'élément avant ne contienne, de chaque côté, qu'une patte de verrouillage, soit à l'avant, soit à l'arrière. Il serait aussi possible de munir l'élément arrière de toit (à la place ou en complément de l'élément avant) d'organes de verrouillage similaires à ceux de l'élément avant (avec, en conséquence, des organes complémentaires de verrouillage dans les arches et/ou dans les brancards afin de permettre le verrouillage du toit en position pliée et/ou déployée) associés à des moyens de déplacement qui leur sont propres et solidarisés à l'élément arrière du toit.

Il serait possible d'utiliser le module de toit dans un véhicule de structure différente, par exemple sans brancard.

## Revendications

1. Véhicule comprenant :
- un bâti,
- un toit (4) qui est mobile entre une position déployée dans laquelle il recouvre l'habitacle du véhicule, et une position pliée,
- des moyens d'entraînement (10) qui sont adaptés à entraîner le toit (4) de l'une à l'autre de ses positions et qui comprennent un moteur (11),
- des moyens de verrouillage (17,18,19,20) qui sont mobiles entre une position de verrouillage dans laquelle le toit (4) est verrouillé dans sa position déployée, et une position de libération, et qui comprennent des organes de verrouillage (17,18) solidarisés à un élément du toit (4) et des organes complémentaires de verrouillage (19,20) solidaires du bâti, et
- des moyens de déplacement (23) qui sont adaptés à entraîner les moyens de verrouillage (17,18,19,20) de l'une à l'autre de leurs positions et qui comprennent un moteur (24) indépendant de celui faisant partie des moyens d'entraînement (10),
**caractérisé en ce que** les organes complémentaires de verrouillage (19,20) sont réalisés dans des brancards (1) qui sont solidaires du bâti et entre lesquels le toit (4) repose en position déployée.

2. Véhicule selon la revendication 1, **caractérisé en ce que** des organes complémentaires de verrouillage (19,20) sont réalisées dans des arches (3) qui sont solidaires du bâti et entre lesquelles le toit (4) repose en position pliée.

3. Véhicule selon la revendication 1 ou 2, **caractérisé en ce que** chaque organe de verrouillage (17,18) comprend une patte de verrouillage (17,18) montée en rotation selon un axe vertical (21), l'organe complémentaire de verrouillage (19,20) étant formé par une rainure (19,20) adaptée à recevoir la patte de verrouillage (17,18) en position de verrouillage.

4. Véhicule selon la revendication 3, **caractérisé en ce que** chaque patte de verrouillage (17,18) est mobile entre une position de verrouillage dans laquelle elle s'étend transversalement au véhicule, et une position de libération dans laquelle elle s'étend longitudinalement.

5. Véhicule selon la revendication 4, **caractérisé en ce que,** quand le toit (4) est dans sa position déployée, chaque patte de verrouillage (17,18) en position de libération est logée dans une gouttière (22) qui s'étend le long du brancard (1) correspondant.

6. Véhicule selon l'une des revendications 1 à 5, **caractérisé en ce que** le toit (4) comprend un élément arrière (5) qui est articulé, par sa partie arrière, au bâti, et un élément avant (6) qui est articulé, par son extrémité arrière, à l'extrémité avant de l'élément arrière (5), au moins l'un des deux éléments de toit (4,5) comprenant des organes de verrouillage (17,18) adaptés à coopérer avec des organes complémentaires de verrouillage (19,20).

7. Véhicule selon la revendication 6, **caractérisé en ce qu'**au moins l'un des éléments de toit (5,6) qui comprend des organes de verrouillage, comporte de chaque côté une patte de verrouillage (17) qui est disposé à proximité de l'extrémité avant dudit élément de toit (5,6).

8. Véhicule selon la revendication 6 ou 7, **caractérisé en ce qu'**au moins l'un des éléments de toit (5,6) qui comprend des organes de verrouillage, comporte de chaque côté une patte de verrouillage (18) qui est disposé à proximité de l'extrémité arrière dudit élément de toit (5,6).

## Claims

1. Vehicle comprising:
- a frame,
- a roof (4) that is moveable between an extended position in which it covers the vehicle passenger compartment, and a folded position,
- drive means (10) that are suitable for driving the roof (4) from one of its positions to the other, and which comprise a motor (11),
- locking means (17, 18, 19, 20) that are moveable between a locking position in which the roof (4) is locked in its extended position, and a releasing position, and that comprise locking members (17, 18) mounted on a roof part (4) and complementary locking members (19, 20) mounted on the frame, and
- shifting means (23) that are suitable for driving the locking means (17, 18, 19, 20) from one of their positions to the other and that comprise a motor (24) independent of the motor forming part of the drive means (10),
said vehicle being **characterized in that** the complementary locking members (19, 20) are formed in shafts (1) mounted on the frame, between which shafts the roof (4) rests in the extended position.

2. Vehicle according to Claim 1, **characterized in that** complementary locking members (19, 20) are formed in arches (3) mounted on the frame, between which arches the roof (4) rests in the folded position.

3. Vehicle according to Claim 1 or 2, **characterized in that** each locking member (17, 18) comprises a locking tab (17, 18) mounted rotatably about a vertical axis (21), the complementary locking member (19, 20) being formed by a groove (19, 20) designed to receive the locking tab (17, 18) in the locking position.

4. Vehicle according to Claim 3, **characterized in that** each locking tab (17, 18) is moveable between a locking position in which it extends transversely relative to the vehicle, and a releasing position in which it extends longitudinally.

5. Vehicle according to Claim 4, **characterized in that**, when the roof (4) is in its extended position, each locking tab (17, 18) in the releasing position is housed in a gutter (22) running along the corresponding shaft (1).

6. Vehicle according to one of Claims 1 to 5, **characterized in that** the roof (4) comprises a rear part (5) hinged at its rear portion to the frame, and a front part (6) hinged at its rear edge to the front edge of the rear part (5), at least one of the two roof parts (4, 5) comprising locking members (17, 18) suitable for engaging with complementary locking members (19, 20).

7. Vehicle according to Claim 6, **characterized in that** at least one of the roof parts (5, 6) which comprises locking members has on each side a locking tab (17) positioned near the front edge of said roof part (5, 6).

8. Vehicle according to Claim 6 or 7, **characterized in that** at least one of the roof parts (5, 6) that comprises locking members has on each side a locking tab (18) positioned near the rear edge of said roof part (5, 6).

## Patentansprüche

1. Fahrzeug mit:
- einem Aufbau,
- einem Dach (4), das zwischen einer aufgefalteten Position, in der es die Fahrgastzelle des Fahrzeugs abdeckt, und einer gefalteten Position beweglich ist,
- Antriebsmitteln (10), die das Dach (4) von der einen zur anderen seiner Positionen antreiben können und einen Motor (11) aufweisen,
- Verriegelungsmitteln (17, 18, 19, 20), die zwischen einer Verriegelungsposition, in der das Dach (4) in seiner aufgefalteten Position verriegelt ist, und einer Freigabeposition beweglich sind, und die Verriegelungsorgane (17, 18) aufweisen, die fest mit einem Element des Dachs (4) verbunden sind, und ergänzende Verriegelungsorgane (19, 20), die fest mit dem Aufbau verbunden sind, und
- Bewegungsmitteln (23), die die Verriegelungsmittel (17, 18, 19, 20) von der einen zu der anderen ihrer Positionen antreiben können und die einen Motor (24) aufweisen, der von dem unabhängig ist, der zu den Antriebsmitteln (10) gehört,
**dadurch gekennzeichnet, dass** die ergänzenden Verriegelungsorgane (19, 20) in den Bodenlängsträgern (1) hergestellt sind, die fest mit dem Aufbau verbunden sind und zwischen welchen das Dach (4) in seiner aufgefalteten Position ruht.

2. Fahrzeug nach Anspruch 1, **dadurch gekennzeichnet, dass** die ergänzenden Verriegelungsorgane (19, 20) in Bögen (3) hergestellt sind, die fest mit dem Aufbau verbunden sind und zwischen welchen das Dach (4) in gefalteter Position ruht.

3. Fahrzeug nach Anspruch 1 oder 2, **dadurch gekennzeichnet, dass** jedes Verriegelungsorgan (17, 18) eine Verriegelungspratze (17, 18) aufweist, die in Drehung entlang einer vertikalen Achse (21) montiert ist, wobei das ergänzende Verriegelungsorgan (19, 20) aus einer Rille (19, 20) gebildet ist, die die Verriegelungspratze (17, 18) in Verriegelungsposition aufnehmen kann.

4. Fahrzeug nach Anspruch 3, **dadurch gekennzeichnet, dass** jede Verriegelungspratze (17, 18) zwischen einer Verriegelungsposition, in der sie sich quer zu dem Fahrzeug erstreckt, und einer Freigabeposition, in der sie sich längs erstreckt, beweglich ist.

5. Fahrzeug nach Anspruch 4, **dadurch gekennzeichnet, dass,** wenn das Dach (4) in seiner aufgefalteten Position ist, jede Verriegelungspratze (17, 18) in Freigabeposition in einer Rinne (22) untergebracht ist, die sich entlang des entsprechenden Bodenlängsträgers (1) erstreckt.

6. Fahrzeug nach einem der Ansprüche 1 bis 5, **dadurch gekennzeichnet, dass** das Dach (4) ein hinteres Element (5) aufweist, das durch seinen hinteren Teil an dem Rahmen angelenkt ist, und ein vorderes Element (6), das durch sein hinteres Ende an dem vorderen Ende des hinteren Elements (5) angelenkt ist, wobei mindestens eines der zwei Dachelemente (4, 5) Verriegelungsorgane (17, 18) aufweist, die mit den ergänzenden Verriegelungsorganen (19, 20) zusammenwirken können.

7. Fahrzeug nach Anspruch 6, **dadurch gekennzeichnet, dass** mindestens eines der Dachelemente (5, 6), das Verriegelungsorgane aufweist, auf jeder Seite eine Verriegelungspratze (17) aufweist, die in der Nähe des vorderen Endes des Dachelements (5, 6) angeordnet ist.

8. Fahrzeug nach einem der Ansprüche 6 oder 7, **dadurch gekennzeichnet, dass** mindestens eines der Dachelemente (5, 6), das Verriegelungsorgane aufweist, auf jeder Seite eine Verriegelungspratze (18) aufweist, die in der Nähe des hinteren Endes des Dachelemente (5, 6) angeordnet ist.
